# EUROPÄISCHE PATENTSCHRIFT

(11) **EP 3 221 172 B1**
(45) Veröffentlichungstag und Bekanntmachung des Hinweises auf die Patenterteilung: **24.02.2021**
(21) Anmeldenummer: 15790531.6
(22) Anmeldetag: 03.11.2015
(51) Int. Cl.: B60K 11/08

(54) **LUFTZUFUHREINSTELLVORRICHTUNG FÜR EIN KRAFTFAHRZEUG**
AIR SUPPLY ADJUSTMENT DEVICE FOR A MOTOR VEHICLE
DISPOSITIF DE RÉGLAGE D'AMENÉE D'AIR POUR VÉHICULE AUTOMOBILE

(30) Priorität: 21.11.2014 DE 102014223766
(43) Veröffentlichungstag der Anmeldung: 27.09.2017
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); FRISCHEISEN, Andreas, 85452 Eichenried-Moosinning (DE); KELM, Michael, 86316 Friedberg (DE); RIEDL, Wilhelm, 85276 Pfaffenhofen (DE)
(86) Internationale Anmeldenummer: PCT/EP2015/075611
(87) Internationale Veröffentlichungsnummer: WO 2016/078910

(56) Entgegenhaltungen:
- EP-A2- 1 734 294
- WO-A1-2013/180569
- DE-A1- 10 018 154
- DE-A1- 10 222 320
- DE-A1-102011 100 582
- DE-A1-102012 000 173
- DE-A1-102013 221 336

## Beschreibung

Die vorliegende Erfindung betrifft eine Luftzufuhreinstellvorrichtung für ein Kraftfahrzeug mit einem Luftdurchgang, in dem zumindest eine drehbare Klappe zur Regelung einer Luftmenge in dem Luftdurchgang angeordnet ist.

Es ist bekannt, zur Regelung einer Luftzufuhr zu einem Kühler eines Verbrennungsmotors eines Kraftfahrzeugs drehbare bzw. verstellbare Klappen vorzusehen, mittels derer eine Luftmenge eingestellt werden kann, die dem Kühler zuführbar ist. Beispielsweise sind derartige Luftzufuhreinstellvorrichtungen im Bereich eines sogenannten Kühlergrills, d.h. hinter dem Kühlergrill oder in dem Kühlergrill integriert, angeordnet. Bei geschlossenen Klappen kann dabei ein Luftwiderstand des Kraftfahrzeugs und damit ein Kraftstoffverbrach des Kraftfahrzeugs gesenkt werden. Ferner ist es damit möglich einen Wärmeverlust des Motorraums vorteilhaft zu verringern. Bei Kühlluftbedarf werden die Klappen geöffnet.

### Zum Antrieb von derartigen

Luftzufuhreinstellvorrichtungen/Kühlluftklappensteuerungen gibt es eine Vielzahl von Vorschlägen im Stand der Technik. Beispielsweise ist aus der DE 102014001706 A1 eine Regelungseinrichtung für einen Luftstrom einer Kühlereinrichtung mit einer verstellbaren Lamelle und einer Verstelleinrichtung bekannt, wobei die Verstelleinrichtung einen Formgedächtnisaktor aufweist. Der Formgedächtnisaktor ist in der Form eines Drahtes ausgebildet, der seitlich der Lamellen angeordnete Antriebsrollen umschlingt. Durch ohmsche Erwärmung des Drahtes verändert dieser seine Länge und treibt entsprechend die Antriebsrollen an.

Darüber hinaus ist aus der WO 2007130847 A2 ebenfalls ein verschließbarer Kühlergrill bekannt, der mittels eines Drahts aus einem aktiven Material antreibbar ist. Beispielsweise ist der Draht beabstandet zur Drehachse an der Klappe befestigt und kann die Klappe unter Ausnutzung eines Hebelarms und durch Verkürzen des Drahts bewegen. Eine Rückstellung der Klappe erfolgt über ein Federelement.

Die im Stand der Technik vorgeschlagenen Antriebe von verstellbaren Klappen sind jeweils außerhalb der Klappen angeordnet und benötigen entsprechenden Bauraum.

Die gattungsgemäße EP 1 734 294 A2 ist auf eine Durchflusssteuerung mit einer drehbaren Klappe gerichtet, die mit einem Formgedächtnislegierung-Aktuator angetrieben wird.

Es ist nunmehr die Aufgabe der vorliegenden Erfindung, eine Luftzufuhreinstellvorrichtung für ein Kraftfahrzeug zu schaffen, die einen Antrieb aufweist, der bei geringerem Bauraum die Klappe zuverlässig antreiben kann.

Diese Aufgabe wird durch eine Luftzufuhreinstellvorrichtung gelöst, die die Merkmale von Patentanspruch 1 aufweist. Vorteilhafte Weiterbildungen sind in den Unteransprüchen aufgeführt.

Gemäß der vorliegenden Erfindung hat eine Luftzufuhreinstellvorrichtung für ein Kraftfahrzeug einen Luftdurchgang, in dem zumindest eine drehbare Klappe zur Regelung einer Luftmenge in dem Luftdurchgang, d.h. einer Luftmenge, die durch den Luftdurchgang gelangen kann, angeordnet ist. Die Klappe ist zwischen einer ersten Stellung, bei der ein Luftdurchlass durch den Luftdurchgang kleiner ist, beispielsweise einer Schließstellung, bei der der Luftdurchlass minimal oder unterbunden ist, und einer zweiten Stellung, bei der der Luftdurchlass durch den Luftdurchgang größer ist, beispielsweise, einer Offenstellung, bei der der Luftdurchlass maximal ist, drehbar. Die Klappe ist mit einem Linearantrieb verbunden bzw. gekoppelt, der sich parallel zu einer Drehachse der Klappe erstreckt.

Durch die Anordnung parallel zu der Drehachse der Klappe kann der Linearantrieb bei geringerem Bauraum im Vergleich zu anderen Anordnungen untergebracht werden. Der Linearantrieb kann damit insbesondere auch innerhalb des Luftdurchgangs angeordnet werden und benötigt damit weniger bzw. keinen Bauraum außerhalb des Luftdurchgangs.

Der Linearantrieb ist bevorzugt mittels eines Wandlergetriebes, das eine translatorische Bewegung des Linearantriebs in eine Drehbewegung der Klappe wandelt, mit der Klappe gekoppelt.

Bevorzugt ist der Linearantrieb im Bereich der Drehachse der Klappe angeordnet. Hierdurch ist kein seitlicher Bauraum, d.h. links oder rechts der Klappe bzw. über oder unter der Klappe, für den Linearantrieb erforderlich. Der Linearantrieb kann damit in dem Luftdurchgang angeordnet sein, ohne dass der Linearantrieb einen Luftdurchlass durch den Luftdurchgang einschränkt.

Die Klappe umgibt den Linearantrieb vollständig. Mit anderen Worten ist der Linearantrieb vollständig in der Klappe integriert.

Hierdurch ist der Linearantrieb gegenüber äußeren Umwelteinflüssen bei geringem Bauraum besonders geschützt untergebracht. Ferner ist der Luftdurchlass durch den Linearantrieb nicht eingeschränkt.

Der Linearantrieb erstreckt zwischen einem ersten Drehlager und einem zweiten Drehlager der drehbaren Klappe. Mit anderen Worten erstreckt sich der Linearantrieb bevorzugt über maximal eine Länge der drehbaren Klappe. Hierdurch benötigt der Linearantrieb in seitlicher Richtung keinen über eine Länge der Klappe hinausgehenden Bauraum.

Gemäß einer bevorzugten Weiterbildung der Luftzufuhreinstellvorrichtung ist der Linearantrieb insbesondere direkt über eine Schneckenkulissenführung mit der drehbaren Klappe gekoppelt und die Schneckenkulissenführung ist angepasst, die translatorische Bewegung des Linearantriebs in die Drehbewegung der Klappe umzuwandeln. Die Schneckenkulissenführung bildet dabei das Wandlergetriebe.

Eine Schneckenkulissenführung kann dabei sehr bauraumsparend als Wandlergetriebe zwischen linearer Bewegung und Drehbewegung eingesetzt werden.

Bevorzugt weist der Linearantrieb einen elektrischen Aktuator und/oder einen magnetischen Aktuator und/oder einen piezokeramischen Aktuator und/oder einen hydraulischen Aktuator auf. Alternativ oder zusätzlich weist der Linearantrieb einen Aktuator auf, der aus einem elektrisch und/oder thermisch aktivierbaren Formgedächtnismaterial besteht.

Ein derartiger Aktuator ist bei Einbau im Wesentlichen parallel zu der Drehachse der Klappe besonders bauraumsparend. Außerdem ist ein derartiger Aktuator verschleißarm und verhältnismäßig unempfindlich gegenüber Umwelteinflüssen, denen der Aktuator in einem Kraftfahrzeug ausgesetzt ist. Außerdem weist ein derartiger Aktuator wenig mechanische Bestandteile auf.

Der Aktuator aus dem Formgedächtnismaterial ist bevorzugt ein Draht, der beispielsweise aus einer Formgedächtnislegierung besteht und mittels Beaufschlagung von elektrischem Strom erwärmbar ist und hierdurch in seiner Länger veränderbar bzw. verkürzbar ist.

Bevorzugt weist der Linearantrieb einen Gegenaktuator auf, der angepasst ist, den Linearantrieb in seine Ausgangsposition zurückzudrängen.

Hierdurch kann die Klappe wieder in ihre Ausgangsposition / Grundposition oder eine andere Position auf dem Weg zur Ausgangsposition zurückgedreht werden.

Bevorzugt ist der Gegenaktuator beispielsweise eine Federeinrichtung, die entgegengesetzt des Linearantriebs wirkt. Alternativ kann der Gegenaktuator aber auch aus jeglichem anderen Linearaktuator, wie beispielsweise den zuvor genannten Aktuatoren, ausgebildet sein. Bevorzugt kann der Gegenaktuator aus einem elektrisch und/oder thermisch aktivierbaren Formgedächtnismaterial bestehen, wie beispielsweise einem Draht aus einer Formgedächtnislegierung.

Die Luftzufuhreinstellvorrichtung kann integraler Bestandteil eines Kühlergrills sein. Ferner kann die Luftzufuhreinstellvorrichtung in einem Raum zwischen einem Kühler und einem Kühlergrill, beispielsweise unmittelbar hinter dem Kühlergrill, angeordnet sein.

Ein Kühlergrill ist üblicherweise im Vorderwagenbereich eines Kraftfahrzeugs angeordnet.

Die Luftzufuhreinstellvorrichtung kann jedoch auch für jeglichen anderen Luftdurchgang zu einem Aggregat bzw. einem Aggregateraum des Kraftfahrzeugs ausgebildet sein. Ein Aggregat kann beispielsweise auch der Wärmetauscher einer Klimaanlage oder eine Kühlvorrichtung für eine Traktionsbatterie des Kraftfahrzeugs sein. Die Luftzufuhreinstellvorrichtung kann auch für einen Luftdurchgang zu einem Fahrgastraum zur Belüftung / Klimatisierung des Fahrgastraums ausgebildet sein.

Vorstehend aufgeführte Weiterbildungen der Erfindung können, soweit sinnvoll und möglich, beliebig miteinander kombiniert werden.

Es folgt eine Kurzbeschreibung der Figuren.
- Fig. 1: ist eine schematische geschnittene Vorderansicht einer Luftzufuhreinstellvorrichtung gemäß einem Ausführungsbeispiel der vorliegenden Erfindung.
- Fig. 2: ist eine schematische geschnittene Detailansicht der Luftzufuhreinstellvorrichtung gemäß dem Ausführungsbeispiel der vorliegenden Erfindung.

Im Folgenden ist unter Bezugnahme auf die Figuren ein Ausführungsbeispiel der vorliegenden Erfindung in Einzelheiten beschrieben.

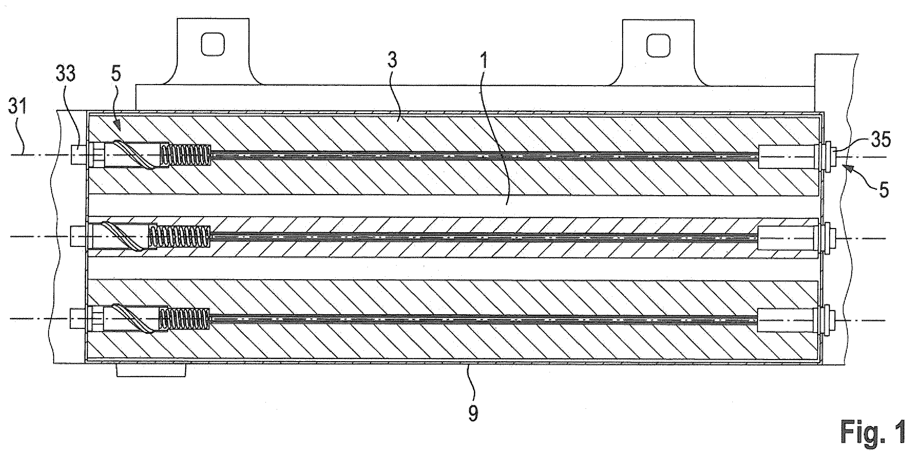

Eine Luftzufuhreinstellvorrichtung für ein Kraftfahrzeug gemäß dem Ausführungsbeispiel der vorliegenden Erfindung ist zur Anordnung hinter einem Kühlergrill des Kraftfahrzeugs ausgebildet. Die Luftzufuhreinstellvorrichtung kann eine Luftzufuhr zu einem Kühler zum Kühlen eines Verbrennungsmotors des Kraftfahrzeugs geeignet regeln/einstellen. Insbesondere weist die Luftzufuhreinstellvorrichtung gemäß dem Ausführungsbeispiel der vorliegenden Erfindung beispielsweise drei drehbare Klappen 3 in einem Luftdurchgang 1 auf, wobei im Folgenden beispielhaft eine der Klappen 3 beschrieben ist. Die Klappe ist um eine Drehachse 31 drehbar. Hierdurch kann eine Luftmenge, die durch den Luftdurchgang 1 gelangen kann, verändert werden, wobei die Klappe 3 von einer Schließstellung, bei der kein oder nur ein minimaler Luftdurchlass durch den zugehörigen Abschnitt des Luftdurchgangs 1 möglich ist, bis zu einer Offenstellung, bei der ein Luftdurchlass durch den Luftdurchgang 1 maximal ist, drehbar ist. In Figur 1 ist die oberste Klappe 3 in Schließstellung, die mittlere Klappe in Offenstellung und die untere Klappe in Schließstellung dargestellt.

Die Klappe 3 ist an ihrem linken Ende sowie an ihrem rechten Ende über eine Lagerung 33 bzw. eine Lagerung 35 in einem Rahmen 9 gelagert, der einen Luftdurchgang 1 begrenzt.

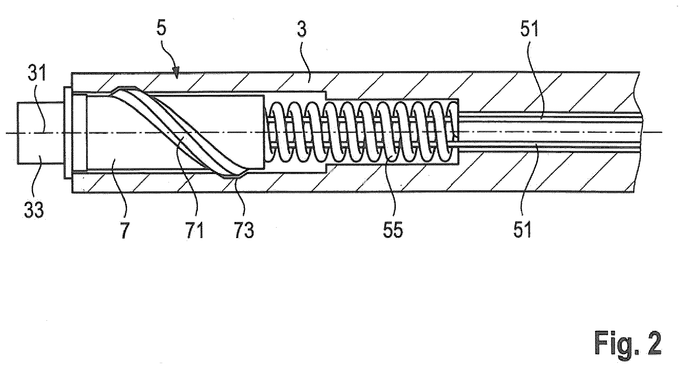

Wie in Figur 2 im Detail gezeigt ist, ist zur Drehung der Klappe 3 ein Linearantrieb 5 vorgesehen, der parallel und insbesondere im Wesentlichen konzentrisch zur Drehachse 31 der Klappe 3 angeordnet ist. Der Linearantrieb 5 weist dabei einen Draht 51 aus einem Formgedächtnismaterial, insbesondere einer Formgedächtnislegierung, auf, der in seiner Länge veränderbar ist. Der Draht 51 ist durch erhitzen, beispielsweise mittels elektrischem Strom, in seiner Länge veränderbar. Hierfür hat der Linearantrieb 5 im Bereich der rechten Lagerung 35 einen nicht dargestellten Stromanschluss. Wenn durch den Draht 51 elektrischer Strom geleitet wird, erhitzt sich dieser und verkürzt sich damit in der Länge. Der Draht 51 ist dabei mit einem Schneckengetriebe 7, das ein erfindungsgemäßes Wandlergetriebe ist und im Bereich der linken Lagerung 33 der Klappe 3 angeordnet ist, verbunden. Das Schneckengetriebe 7 ist konzentrisch zu der Drehachse 31 der Klappe 3 angeordnet. Wie in Figur 2 gezeigt ist, kann das Schneckengetriebe 7 aus einem Kreiszylinder bestehen, in dem ein am äußeren Umfang des Kreiszylinders ausgebildeter schneckenförmiger Führungsrücken 71 analog einem Gewinde angeordnet ist. Der Kreiszylinder ist konzentrisch zu der Längsachse 31 angeordnet und in Richtung der Längsachse 31 verschiebbar und nicht drehbar gelagert. Der Draht 51 ist mit dem Kreiszylinder verbunden. Eine Verkürzung des Drahtes 51 resultiert damit in einer Linearverschiebung des Kreiszylinders entlang der Längsachse 31. Der Führungsrücken 71 des Kreiszylinders greift in eine Führungsvertiefung 73 ein, die an einem inneren Umfang einer Bohrung der Klappe 3 ausgebildet ist. Bei einem Verschieben des Kreiszylinders 7 in Richtung der Drehachse 31 wird hierdurch die Klappe 3 durch Eingriff des Führungsrückens 71 mit der Führungsvertiefung 73 gedreht.

Grundsätzlich ist auch eine Anordnung des Führungsrückens an der Klappe und einer Führungsnut in dem Kreiszylinder möglich. Ferner kann anstelle eines schneckenartig angeordneten Führungsrückens auch lediglich eine Führungsnase vorgesehen sein.

Um eine Rückstellung der Klappe 3 zu ihrer Grundposition zu ermöglichen, ist ein Gegenaktuator beispielsweise in Form einer ebenfalls konzentrisch zu der Drehachse 31 angeordneten Schraubenfeder 55 vorgesehen, die den Kreiszylinder 7 wieder in die Grundposition zurückdrängen, d.h. zurückschieben, kann, sobald eine Länge des Drahtes 51 wieder größer wird, weil beispielsweise eine Stromzufuhr zu dem Draht 51 verringert oder unterbrochen ist und damit der Draht 51 beispielsweise wieder seine ursprüngliche Länge einnimmt. Um den Vorgang des Abkühlens und damit des Verkürzens des Drahtes 51 zu beschleunigen, kann hierzu eine geeignete Kühlvorrichtung gegebenenfalls unter Ausnutzung des Luftstromes während einer Fahrt des Kraftfahrzeugs vorgesehen sein.

Im vorliegenden Fall ist die Klappe 3 stromlos geöffnet, wie in Fig. 2 zu sehen ist. Der Zylinder ist durch die Schraubenfeder 55 vollständig nach links in die Grundposition gedrückt. Die in Fig. 1 gezeigte oberste Klappe 3 befindet sich dahingegen in der vollständig bestromten geschlossenen Stellung, wobei der Zylinder gegen die Kraft der Schraubenfeder 55 vollständig nach rechts verschoben ist.

Selbstverständlich ist auch eine stromlos geschlossene Ausführung der Klappe möglich.

Der Linearantrieb in Form des Drahtes 51, des Gegenaktuators 55 und des Scheckengetriebes 7 bestehend aus dem Zylinder sowie dem Stromanschluss sind im Bereich der Drehachse 31 der Klappe 3 in der Klappe 3 vor Umwelteinflüssen geschützt integriert. Mit anderen Worten umgibt die Klappe 3 den Linearantrieb mit dem Schneckengetriebe 7 vollständig.

In den Figuren 1 und 2 sind je Linearantrieb 5 zwei Drähte 51 gezeigt, die die gleiche Funktion haben und lediglich aus Gründen einer Redundanz vorgesehen sind.

In Figur 1 sind drei Klappen 3 dargestellt, es können jedoch auch mehrere oder lediglich zwei Klappen untereinander in dem Rahmen 9 angeordnet sein. Grundsätzlich kann auch nur eine Klappe in dem Rahmen 9 vorgesehen sein, die den gesamten Luftdurchgang 1 durch Rahmen 9 einstellen kann.

Die Klappen 3 können, wie in Fig. 1 gezeigt ist, alle einen eigenen Linearantrieb 5 aufweisen, so dass diese unabhängig voneinander drehbar sind. Es ist jedoch auch möglich, dass nur eine Klappe als Antriebsklappe einen Linearantrieb aufweist, während die anderen Klappen ohne eigenen Antrieb mit der Antriebsklappe gekoppelt sind. Die Klappe kann in einem Bereich zwischen einem Kühlereinlass, d.h. einem Kühlergrill, und dem Kühler angeordnet sein. Die Klappen können auch Bestandteil des Kühlergrills sein.

Durch den erfindungsgemäßen Linearantrieb kann der Klappenantrieb vorteilhaft vollständig in der Klappe integriert sein, so dass der Klappenantrieb keinen zusätzlichen Bauraum benötigt und vor Umwelteinflüssen im Frontbereich des Kraftfahrzeugs geschützt ist.

## Patentansprüche

1. Luftzufuhreinstellvorrichtung für ein Kraftfahrzeug mit einem Luftdurchgang (1) zu einem Aggregat bzw. einem Aggregateraum, wobei in dem Luftdurchgang zumindest eine drehbare Klappe (3) zur Regelung eine Luftmenge in dem Luftdurchgang (1) angeordnet ist, die zumindest zwischen einer ersten Stellung, bei der ein Luftdurchlass kleiner ist, und einer zweiten Stellung, bei der ein Luftdurchlass größer ist, drehbar ist, wobei die Klappe (3) mit einem Linearantrieb (5), der sich parallel zu einer Drehachse (31) der Klappe (3) erstreckt, gekoppelt ist und durch diesen drehbar ist,
**dadurch gekennzeichnet, dass**
der Linearantrieb (5) sich zwischen einem ersten Drehlager (33) und einem zweiten Drehlager (35) der drehbaren Klappe (3) erstreckt und die Klappe (3) den Linearantrieb vollständig umgibt.

2. Luftzufuhreinstellvorrichtung nach Patentanspruch 1, wobei der Linearantrieb (5) in einem Bereich der Drehachse (31) der Klappe (3) angeordnet ist.

3. Luftzufuhreinstellvorrichtung nach Patentanspruch 1 oder 2, wobei die Klappe (3) den Linearantrieb (5) insbesondere im Wesentlichen vollständig umgibt bzw. der Linearantrieb (5) im Wesentlichen vollständig in der Klappe (3) integriert ist.

4. Luftzufuhreinstellvorrichtung nach einem der Patentansprüche 1 bis 3, wobei der Linearantrieb (3), insbesondere direkt, über eine Schneckenkulissenführung (7) mit der drehbaren Klappe (3) gekoppelt ist und die Schneckenkulissenführung (7) angepasst ist, die translatorische Bewegung des Linearantriebs (5) in die Drehbewegung der Klappe (3) umzuwandeln.

5. Luftzufuhreinstellvorrichtung nach einem der Patentansprüche 1 bis 4, wobei der Linearantrieb (5) einen elektrischen, magnetischen, piezokeramischen und/oder hydraulischen Aktuator aufweist.

6. Luftzufuhreinstellvorrichtung nach Patentanspruch 5, wobei der Linearantrieb (5) einen Aktuator (51) aus einem elektrisch und/oder thermisch aktivierbarem Formgedächtnismaterial aufweist.

7. Luftzufuhreinstellvorrichtung nach Patentanspruch 6, wobei der Aktuator ein Draht (51) aus einem Formgedächtnismaterial, insbesondere einer Formgedächtnislegierung, ist, das mittels elektrischem Strom erwärmbar ist und hierdurch in seiner Länge veränderbar ist.

8. Luftzufuhreinstellvorrichtung nach einem der Patentansprüche 1 bis 7, wobei der Linearantrieb (5) einen Gegenaktuator (53) aufweist, der angepasst ist, den Linearantrieb (5) in seine Ausgangsposition zurückzudrängen.

9. Luftzufuhreinstellvorrichtung nach Patentanspruch 8, wobei der Gegenaktuator eine Federeinrichtung (53) oder ein Aktuator aus einem elektrisch und/oder thermisch aktivierbarem Formgedächtnismaterial ist.

10. Luftzufuhreinstellvorrichtung nach einem der Patentansprüche 1 bis 9, wobei die Luftzufuhreinstellvorrichtung Bestandteil eines Kühlergrills sein kann oder unmittelbar hinter einem Kühlergrill anordenbar ist.

11. Kraftfahrzeug mit einer Luftzufuhreinstellvorrichtung nach einem der Patentansprüche 1 bis 10.

## Claims

1. Air feed setting apparatus for a motor vehicle with an air passage (1) to a power unit or a power unit compartment, at least one rotatable flap (3) for the regulation of an air quantity in the air passage (1) being arranged in the air passage, which flap (3) can be rotated at least between a first position, in the case of which an air passage is smaller, and a second position, in the case of which an air passage is larger, the flap (3) being coupled to a linear drive (5) which extends parallel to a rotational axis (31) of the flap (3), and it being possible for the said flap (3) to be rotated by way of the said linear drive (5), **characterized in that** the linear drive (5) extends between a first pivot bearing (33) and a second pivot bearing (35) of the rotatable flap (3), and the flap (3) surrounds the linear drive completely.

2. Air feed setting apparatus according to Patent Claim 1, the linear drive (5) being arranged in a region of the rotational axis (31) of the flap (3).

3. Air feed setting apparatus according to Patent Claim 1 or 2, the flap (3) surrounding the linear drive (5), in particular, substantially completely, and/or the linear drive (5) being integrated substantially completely into the flap (3).

4. Air feed setting apparatus according to one of Patent Claims 1 to 3, the linear drive (3) being coupled, in particular directly, via a spiral slotted guide (7) to the rotatable flap (3), and the spiral slotted guide (7) being adapted to convert the translational movement of the linear drive (5) into the rotational movement of the flap (3) .

5. Air feed setting apparatus according to one of Patent Claims 1 to 4, the linear drive (5) having an electric, magnetic, piezoceramic and/or hydraulic actuator.

6. Air feed setting apparatus according to Patent Claim 5, the linear drive (5) having an actuator (51) made from an electrically and/or thermally activatable shape memory material.

7. Air feed setting apparatus according to Patent Claim 6, the actuator being a wire (51) made from a shape memory material, in particular a shape memory alloy, which can be heated by means of electric current and, as a result, can have its length changed.

8. Air feed setting apparatus according to one of Patent Claims 1 to 7, the linear drive (5) having a counter-actuator (53) which is adapted to push the linear drive (5) back into its starting position.

9. Air feed setting apparatus according to Patent Claim 8, the counter-actuator being a spring device (53) or an actuator made from an electrically and/or thermally activatable shape memory material.

10. Air feed setting apparatus according to one of Patent Claims 1 to 9, it being possible for the air feed setting apparatus to be a constituent part of a radiator grille or to be arranged directly behind a radiator grille.

11. Motor vehicle with an air feed setting apparatus according to one of Patent Claims 1 to 10.

## Revendications

1. Dispositif de réglage d'amenée d'air pour un véhicule automobile, comprenant un passage d'air (1) conduisant à un groupe ou à un espace de groupe, au moins un clapet pivotant (3) étant disposé dans le passage d'air pour la régulation d'une quantité d'air dans le passage d'air (1), lequel peut être pivoté au moins entre une première position dans laquelle un passage d'air est relativement faible et une deuxième position dans laquelle un passage d'air est plus important, le clapet (3) étant accouplé à un entraînement linéaire (5) qui s'étend parallèlement à un axe de pivotement (31) du clapet (3) et pouvant être pivoté par celui-ci,
**caractérisé en ce que**
l'entraînement linéaire (5) s'étend entre un premier palier pivotant (33) et un deuxième palier pivotant (35) du clapet pivotant (3) et le clapet (3) entoure complètement l'entraînement linéaire.

2. Dispositif de réglage d'amenée d'air selon la revendication 1, dans lequel l'entraînement linéaire (5) est disposé dans une région de l'axe de rotation (31) du clapet (3).

3. Dispositif de réglage d'amenée d'air selon la revendication 1 ou 2, dans lequel le clapet (3) entoure notamment essentiellement complètement l'entraînement linéaire (5), ou l'entraînement linéaire (5) est essentiellement complètement intégré dans le clapet (3).

4. Dispositif de réglage d'amenée d'air selon l'une quelconque des revendications 1 à 3, dans lequel l'entraînement linéaire (3) est accouplé, notamment directement, au clapet pivotant (3) par le biais d'un guide à coulisse à vis sans fin (7) et le guide à coulisse à vis sans fin (7) est adapté de manière à convertir le mouvement de translation de l'entraînement linéaire (5) en le mouvement de pivotement du clapet (3).

5. Dispositif de réglage d'amenée d'air selon l'une quelconque des revendications 1 à 4, dans lequel l'entraînement linéaire (5) présente un actionneur électrique, magnétique, piézocéramique et/ou hydraulique.

6. Dispositif de réglage d'amenée d'air selon la revendication 5, dans lequel l'entraînement linéaire (5) présente un actionneur (51) constitué d'un matériau à mémoire de forme pouvant être activé électriquement et/ou thermiquement.

7. Dispositif de réglage d'amenée d'air selon la revendication 6, dans lequel l'actionneur est un fil métallique (51) constitué d'un matériau à mémoire de forme, en particulier d'un alliage à mémoire de forme, qui peut être chauffé au moyen d'un courant électrique et dont la longueur peut ainsi être variée.

8. Dispositif de réglage d'amenée d'air selon l'une quelconque des revendications 1 à 7, dans lequel l'entraînement linéaire (5) présente un contre-actionneur (53) qui est adapté pour repousser l'entraînement linéaire (5) dans sa position de départ.

9. Dispositif de réglage d'amenée d'air selon la revendication 8, dans lequel le contre-actionneur est un dispositif à ressort (53) ou un actionneur constitué d'un matériau à mémoire de forme pouvant être activé électriquement et/ou thermiquement.

10. Dispositif de réglage d'amenée d'air selon l'une quelconque des revendications 1 à 9, le dispositif de réglage d'amenée d'air pouvant faire partie d'une grille de radiateur ou pouvant être disposé directement derrière une grille de radiateur.

11. Véhicule automobile comprenant un dispositif de réglage d'amenée d'air selon l'une quelconque des revendications 1 à 10.
